# EUROPEAN PATENT APPLICATION

(11) **EP 1 930 758 A1**
(43) Date of publication of application: **11.06.2008**
(21) Application number: 06767045.5
(22) Date of filing: 21.06.2006
(51) Int. Cl.: G02B 6/42, G02B 6/44

(54) **OPTICAL CABLE AND TRANSMITTING/RECEIVING SUB-ASSEMBLY**

(30) Priority: 30.09.2005 JP 2005287201
(71) Applicant: Mitsumi Electric Co., Ltd., Tama-shi, Tokyo 206-8567 (JP)
(72) Inventor: ONO, Tadashi, Tama-shi Tokyo 206-8567 (JP); ISHIKAWA, Yoshihiro, Tama-shi Tokyo 206-8567 (JP)
(74) Representative: Grünecker, Kinkeldey, Stockmair & Schwanhäusser Anwaltssozietät
(86) International application number: PCT/JP2006/312386
(87) International publication number: WO 2007/039966

(57) **Abstract**

To provide the sending and receiving sub-assembly in which the design has high degree of freedom and the optic cable has high light coupling factor. In the sending and receiving sub-assembly 3a of the connector 3, the photoelectric conversion element 31 is provided on the sub-substrate 32 via the bump 34 so as to have a space between the mounting surface, and the optical waveguide cable 2 is disposed in the space. The height of the photoelectric conversion element 31 with respect to the mounting surface is determined according to the thickness of the optical waveguide cable 2, and the height position is controlled by adjusting the size of the bump 34.

## Description

### Technical Field

The present invention relates to an optic cable which transmits the light via an optical waveguide and a sending and receiving sub-assembly.

### Background Art

In recent years, the optic cable in which the optical waveguide is formed in a cable having a film form is being developed (for example, see patent documents 1 and 2). At the connector portion which is fitted in the socket of such optic cable, a photoelectric conversion element such as the planar type light emitting element (hereinafter, called the VCSEL; Vertical Cavity Emitting Laser), the PD (Photo Diode) or the like is mounted in view of reduction of power consumption and multi-channel.

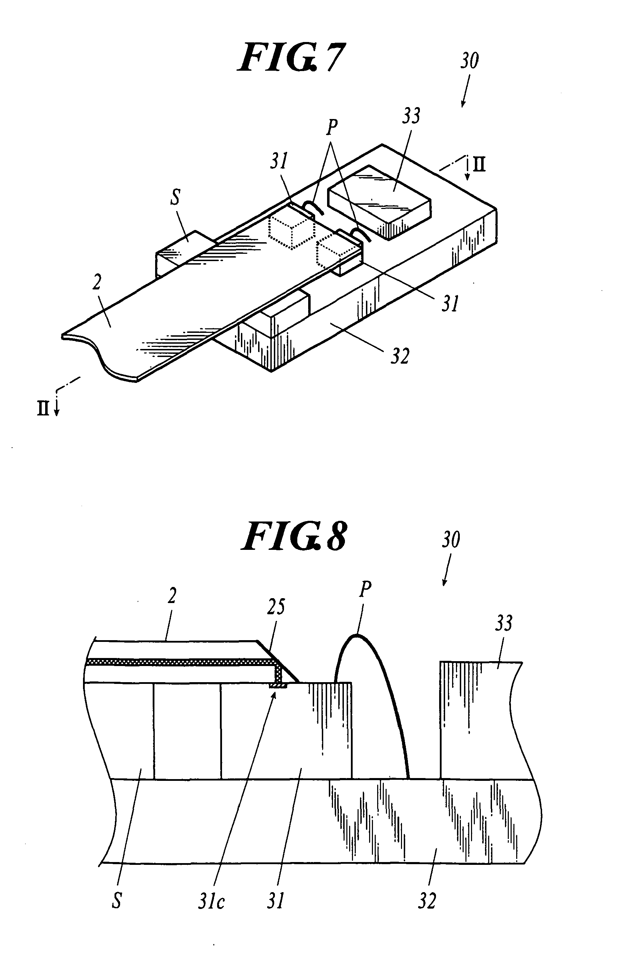

In FIGS. 7 and 8, the conventional structure of the sending and receiving sub-assembly in the connector in which the photoelectric conversion element which are the VCSEL and the PD and the film form optical waveguide cable are implemented is shown. FIG. 7 is a perspective view, and FIG. 8 is a cross sectional view cut along the line II-II in FIG. 7.
As shown in FIGS. 7 and 8, the photoelectric conversion element 31, the IC (Integrated Circuit) 33 and the like are mounted on the sub-substrate 32 in the conventional sending and receiving sub-assembly 30, and it is designed so that the end part of the optical waveguide cable 2 covers the upper portion of the photoelectric conversion element 31 and so that the position of the core of the optical waveguide cable 2 corresponds to the position of the light receiving unit 31c of the photoelectric conversion element 31. Further, the metal wire P is disposed at the photoelectric conversion element 31 and is electrically connected to the electrode in the sub-substrate 32 by the wire bonding method.

Conventionally, the position of the optical waveguide cable 2 on the mounting surface of the sub-substrate 32 is adjusted so that optical paths which couple between the light receiving and emitting unit 31c of the photoelectric conversion element 31 and the core of the optical waveguide cable 2 match after disposing the photoelectric conversion element 31 on the sub-substrate 32 of the sending and receiving sub-assembly 30 and after carrying out the wire bonding. Further, the spacer S is intervened between the optical waveguide cable 2 and the sub-substrate 32 so as to match the height position of the optical waveguide cable 2 with the height of the photoelectric conversion element 31 which is set first.
Patent document 1: JP2001-166167A
Patent document 2: JP2004-361858A

### Disclosure of the Invention

### Problem to be solved by the Invention

In the above described structure, the role of the spacer S is important because the height of the optical waveguide cable 2 is determined by the spacer S. Because the optical waveguide cable 2 is in a film form having flexibility, warping and bending occurs at the end part of the optical waveguide cable 2 when the height of the spacer S does not match with the photoelectric conversion element 31 and the optical axes of the optical waveguide cable 2 and the photoelectric conversion element 31 shift.

In such way, size of the spacer S affects the matching of the optical axes and not only the position of the optical waveguide cable 2 on the mounting surface. Therefore, the optical path coupling factor between the optical waveguide cable 2 and the photoelectric conversion element 31 declines when the allowable error of the shifting of the optical axes becomes large by the shifting of the optical axes of each component. Therefore, an extremely advanced microfabrication is required for the forming of the spacer S and the matching of the potion of the optical waveguide cable 2, and this requirement was the cause of the declining of the productivity of the optic cable.

Moreover, a polymeric material is used as the base material in order to bring out flexibility which is a characteristic of the optical waveguide cable 2. However, there are cases where the polymeric material expands or contracts due the environmental heat change. The tip portion of the optical waveguide cable 2 is not fixed and is attached by being supported by the photoelectric conversion element 31. Therefore, there are cases where the tip portion of the optical waveguide cable 2 curves and warps by the operating temperature of the device in which the optic cable is mounted changing. As a result, a condition in which the optical axes match or do not match occurs and a stable transmission of the light cannot be carried out.

When the components to be set on the sub-substrate 32 increases, such as the spacer S, the wire P and the like other than the photoelectric conversion element 31 and the optical waveguide cable 2, the degree of freedom in design decreases due to the space of setting, and a highly accurate adjustment is required for the position, the size and the like for many of the components. Therefore, the manufacturing efficiency is inefficient.

Further, when the optical paths are being coupled, there is a positional relation in which the propagation loss of the light between the optical waveguide cable 2 and the photoelectric conversion element 31 is minimum. However, because the tip portion of the optical waveguide cable 2 is supported by the photoelectric conversion element 31, the distance of the optical path between the optical waveguide cable 2 and the photoelectric conversion element 31 cannot be adjusted intentionally just by changing the height by the spacer S.

The optical waveguide cable 2 and the photoelectric conversion element 31 becomes in a cohesive condition. However, actually, air intervenes between the optical waveguide cable 2 and the photoelectric conversion element 31 as a medium. Because the refractive factor of the air layer is small comparing to the refractive factor of the clad of the optical waveguide cable 2, the irradiation diameter of the light irradiated from the optical waveguide cable 2 broadens. Therefore, there is a problem that the loss in light propagation in the coupled optical paths occurs in no small measure.

A object of the present invention is to provide an optic cable and a sending and receiving sub-assembly in which the degree of freedom in design is high and the light coupling factor is high.

### Means for solving the problem

The invention described in claim 1 is an optic cable wherein an optical waveguide cable in which a core for a light guide is extended in a light guide direction in a clad and a photoelectric conversion element which optically couples with the core at an end portion of the optical waveguide cable are mounted on a same substrate, and wherein the optical waveguide cable is disposed between a mounting surface of the substrate and the photoelectric conversion element and a height position of the photoelectric conversion element is adjusted according to a height of the optical waveguide cable from the mounting surface.

The invention described in claim 11 is a sending and receiving sub-assembly wherein an end portion of an optical waveguide cable in which a core for a light guide is extended in a light guide direction in a clad and a photoelectric conversion element which is optically coupled with the core at the end portion of the optical waveguide cable are mounted on a same substrate, and wherein the optical waveguide cable is disposed between a mounting surface of the substrate and the photoelectric conversion element and a height position of the photoelectric conversion element is adjusted according to a height of the optical waveguide cable from the mounting surface

### Effect of the Invention

According to the present invention, because the optical waveguide cable is set between the mounting surface of the substrate and the photoelectric conversion element and the optical coupling with the photoelectric conversion element is carried out by setting the optical waveguide cable as the basis, the spacer which is used to adjust the height of the optical waveguide cable can be removed and the optical coupling efficiency can be improved by eliminating the cause of the shifting of the optical axes of the optical coupling and the microfabrication of the spacer is not needed. Therefore, the manufacturing efficiency can be improved. Further, flexibility of the design can be improved and reduction in the product and the high density mounting can be realized by reducing the number of components.

### Brief Description of the Drawings

[FIG. 1] This is a diagram showing an optic cable according to the embodiment.
[FIG. 2] This is a perspective view showing a structure of a sending and receiving sub-assembly in the connector of FIG. 1.
[FIG. 3] This is a cross sectional view of FIG. 2.
[FIG. 4A] This is a diagram showing a process of a manufacturing process (an example) of the sending and receiving sub-assembly.
[FIG. 4B] This is a diagram showing a process of a manufacturing process (an example) of the sending and receiving sub-assembly.
[FIG. 4C] This is a diagram showing a process of a manufacturing process (an example) of the sending and receiving sub-assembly.
[FIG. 5A] This is a diagram showing a process of a manufacturing process (another example) of the sending and receiving sub-assembly.
[FIG. 5B] This is a diagram showing a process of a manufacturing process (another example) of the sending and receiving sub-assembly.
[FIG. 6] This is a diagram showing an example in which the sending and receiving subassembly of FIG. 3 is mounted on both sides.
[FIG. 7] This is a perspective view showing a structure of the sending and receiving sub-assembly of the conventional optic cable.
[FIG. 8] This is a cross sectional diagram of FIG. 7.

### Description of the Reference Numerals

- 1: optic cable
- 2: optical waveguide cable
- 21, 22: clad
- 23: core
- 25: reflecting surface
- 3: connector
- 3a: sending and receiving sub-assembly
- 31: photoelectric conversion element
- 32: sub-substrate
- 34: bump
- 35: optical path forming material

### Best Mode for Carrying out the Invention

### <Structure of the optic cable and the connector portion>

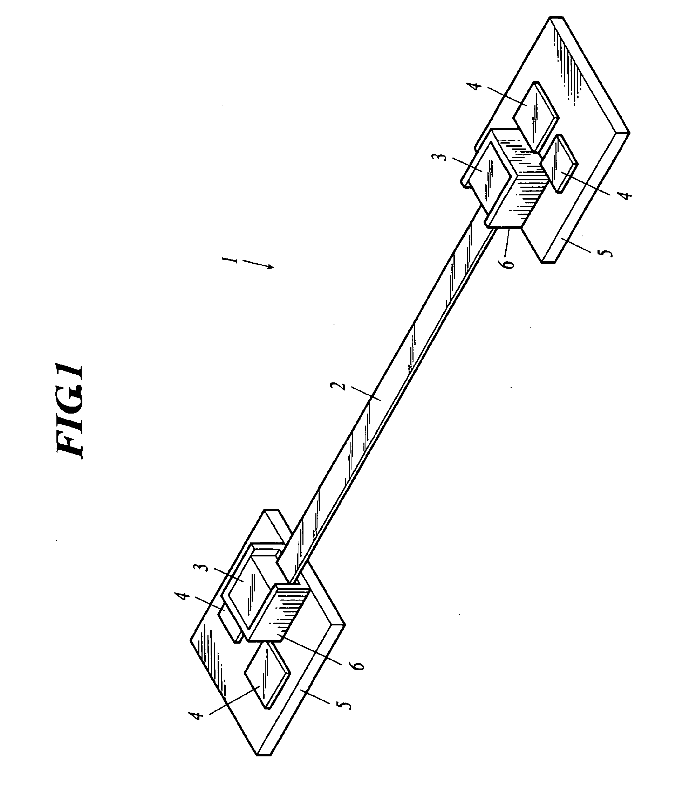

The structure of the optic cable 1 according to the embodiment is shown in FIG. 1.
As shown in FIG. 1, the optic cable 1 connects two print wiring substrates 5 and comprises the connector 3 at both ends of the optical waveguide cable 2. The connector 3 is fitted in the socket 6 which is mounted on the print wiring substrate 5, and the IC 4 is mounted on the print wiring substrate 5 as well.

The optical waveguide cable 2 is formed in a film form, and the optical waveguide in the optical waveguide cable 2 operates as a transmission path for the light which is exchanged between the connectors 3 provided at both ends. The connector 3 comprises the sending and receiving sub-assembly which carries out the photoelectric conversion, and converts the electrical signal input from the print wiring substrate 5 into a light by the sending and receiving sub-assembly and transmits the light to the connector 3 which positions at the other end via the optical waveguide cable 2. Alternatively, the connector 3 receives the light which is transmitted from the connecter 3 at the other end via the optical waveguide cable 2, and converts the light into an electrical signal and outputs the electrical signal to the print wiring substrate 5.

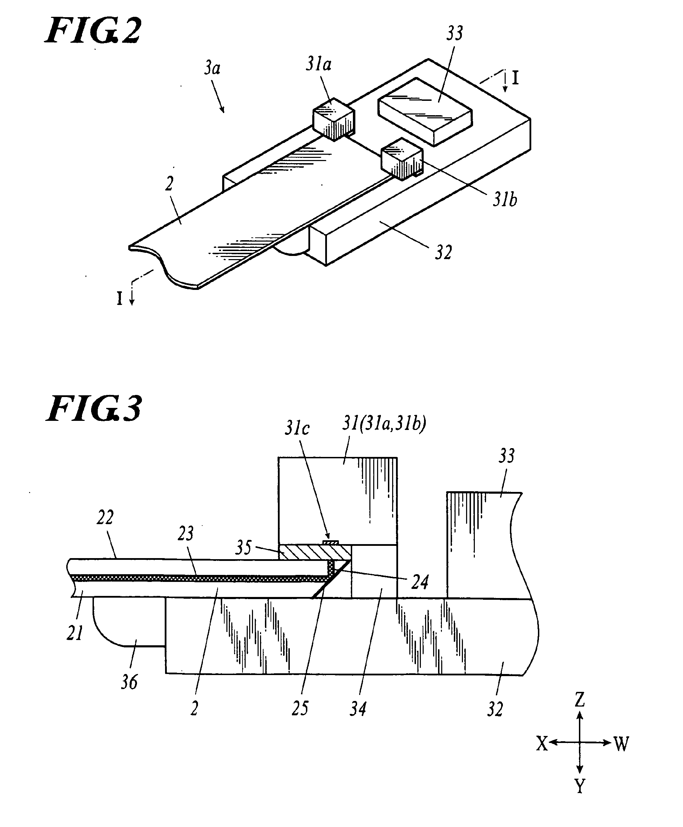

The perspective view of the connecting portion of the optical waveguide cable 2 and the sending and receiving sub-assembly 3a in the connector 3 is shown in FIG. 2, and the cross sectional diagram cut along the line I-I of FIG. 2 is shown in FIG. 3.
As shown in FIGS. 2 and 3, the tip portion of the optical waveguide cable 2 is disposed between the mounting surface of the sub-substrate 32 and the light emitting element 31a or the light receiving element 31b. Further, the optical waveguide cable 2 is attached along the mounting surface so that the film surface in the clad 21 side abuts the sub-substrate 32.

As shown in FIG. 3, the optical waveguide cable 2is formed of the clad 21 and 22 and the core 23, and the reflecting surface 25 is provided at the end of the optical waveguide cable 2. Further, the circumference surface of the optical waveguide cable 2 is covered with a resin film (omitted from the drawing). The resin film operates as equipment and a cover, and is constituted of a material having flexibility such as the polyimide, the PET (Poly Ethylene Terepthalate) or the like.

The clad 21 and 22 and the core 23 are constituted of a resin or the like of the polyimide system, the polysilane, the epoxy system, the acrylic or the like.

The core 23 is formed in a linear form between the clad 21 and 22, and constitutes the optical waveguide. Particularly, the core 23 is formed so that the core layer applied on the clad 21 is formed to become a predetermined path by the etching or the like, and a layer of the clad 22 is applied thereon. The material used for the core 23 is adjusted so that the refraction factor of the core 23 is different from that of the clad 21 and 22. In such way, by the periphery of the core 23 is encircled by the clad 21 and 22 having different refraction factor, the light transmitted in the core 23 can be propagated in one direction without being impairing.

The reflecting surface 25 leads the light transmitted via the core 23 to the light receiving element 31b which positions at the upper part of the optical waveguide cable 2 by reflecting the light. Alternatively, the reflecting surface 25 is an optical path conversion unit which leads the light irradiated from the light emitting element 31a to the core 23 by reflecting the light. The optical waveguide of the optical waveguide cable 2 is the transmission path of the light including the optical path 24 which is lead by the core 23 and the reflecting surface 25. The reflecting surface 25 is formed by cutting the end surface of the optical waveguide cable 2 in the inclining angel of 45 degrees or the like by the blade, the laser or the like.

As shown in FIG. 2, the sending and receiving sub-assembly 3a is constituted by the light emitting element 31a, the light receiving element 31b and the IC 33 being mounted on the sub-substrate 32, and carries out the reciprocal exchange between the electrical signal which is input and output from the print wiring substrate 5 and the light which is input and output via the optical waveguide cable 2.

For example, the surface light emitting type photoelectric conversion element such as the VCSEL or the like is used for the light emitting element 31a. The light emitting element 31a emits the light according to the electrical signal input from the print wiring substrate 5 toward the direction of Z→Y as shown in FIG. 3. The optical path of the light emitted from the light emitting element 31a is converted by the reflecting surface 25 and is transmitted in the direction of W→X.

For example, the photoelectric conversion element such as the PD or the like is used for the light receiving element 31b. The light receiving element 31b receives the light which is transmitted in the direction of X→W in the core 23 of the optical waveguide cable 2 and in which the optical path is changed to the direction of Y→Z via the reflecting surface 25 and generates the electrical signal according to the amount of received light.
Hereinafter, the light emitting element 31a and the light receiving element 31b are called the photoelectric conversion element 31 collectively, and the light emitting part and the light receiving part are called the light receiving and emitting unit 31c.

Here, in the embodiment, a description is given for the example which carries out the transmission of the light in both directions by including the light emitting element 31a and the light receiving element 31b, one element each, in one sending and receiving sub-assembly 3a. However, the structure may be in which the transmission in both directions is carried out by a plurality of paths by including a plurality of each light emitting element 31a and light receiving element 31b. Further, the structure may be in which the light transmission is carried out in one direction by only including the light emitting element 31a in the sending and receiving sub-assembly 3a of one end of the optic cable 1 and only including the light receiving element 31b in the sending and receiving sub-assembly 3a of the other end.

The height position of the photoelectric conversion element 31 is determined according to the height of the optical waveguide cable 2 from the mounting surface. That is, the photoelectric conversion element 31 is disposed via the bump 34 leaving a space between the photoelectric conversion element 31 and the sub-substrate 32, and the height of the photoelectric conversion element 31 is adjusted so as to be higher than the thickness of the optical waveguide cable 2. Further, the position of the photoelectric conversion element 31 on the mounting surface of the substrate is decided so that each optical axis of the light transmitted between the optical waveguide of the optical waveguide cable 2 and the light receiving and emitting unit 31c of the photoelectric element 31 match one another by setting the setting position of the optical waveguide cable 2 on the mounting surface of the sub-substrate 32 as basis.

The height position of the photoelectric conversion element 31 is adjustable by changing the size of the bump 34. That is, by adjusting the bump 34, distance of the optical path between the optical waveguide cable 2 and the photoelectric conversion element 31 can be controlled and the distance can be decided so that the optical coupling efficiency between the optical waveguide cable 2 and the photoelectric conversion element 31 is at maximum.

The bump 34 is constituted of a conductor and electrically connects the electrode of the photoelectric conversion element 31 and the electrode provided at the sub-substrate 32 (each electrode is omitted from the drawing). For example, a metal such as Au or the like is applicable as the bump 34.

The optical path forming material 35 is filled in the space which is formed at the interface between the optical waveguide cable 2 and the photoelectric conversion element 31. The optical path forming material 35 is formed of a photorefractive medium such as a photocurable resin or the like, for example, and the material is selected so that the refraction factor thereof be relatively large with respect to air, for example, so that the refraction factor be about the same as the clad 22 of the optical waveguide cable 2. By the optical path forming material 35, the emission diameter of the light which passes the optical path between the optical waveguide cable 2 and the photoelectric conversion element 31 can be controlled so as to be prevented from broadening.

### <Manufacturing method of the connector portion>

In order to structure the connector 3 portion of the optic cable 1 as described above, the optical waveguide cable 2 can be provided after the photoelectric conversion element 31 is attached other than the method in which the optical waveguide cable 2 is fixed on the sub-substrate 32 of the connector 3 first.

In either method, the setting position of the optical waveguide cable 2 and the photoelectric conversion element 31 on the mounting surface of the sub-substrate 32 is decided in advance so that each optical axis of the light transmitted between the optical waveguide of the optical waveguide cable 2 and the photoelectric element 31 match one another. Further, the height position to set the photoelectric conversion element 31 is decided in advance according to the thickness of the optical waveguide cable 2, the distance from the optical waveguide to the light receiving and emitting unit 31c of the photoelectric conversion element 31 or the like, and the bump 34 is formed according to the height.

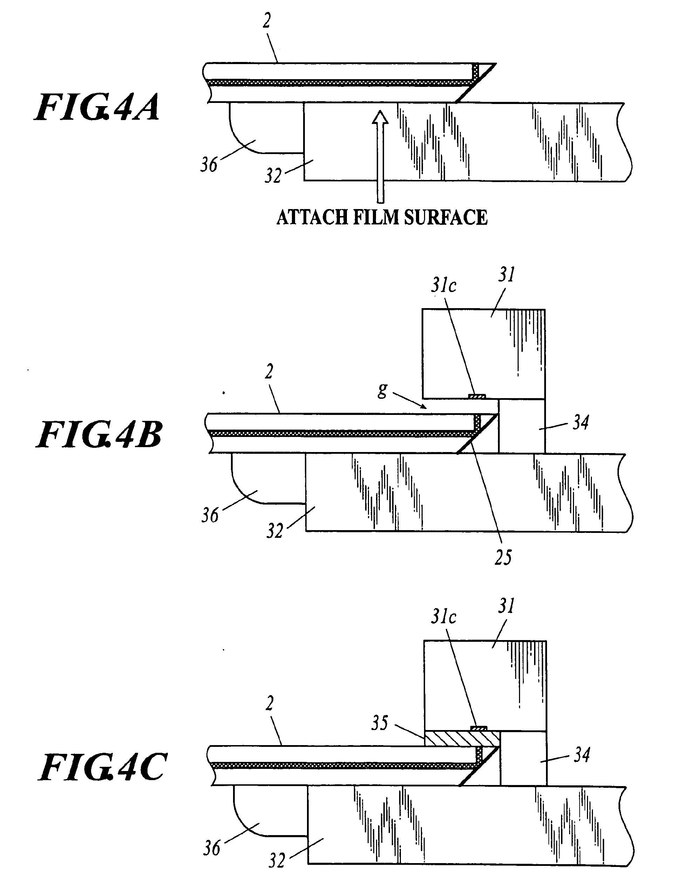

When the optical waveguide cable 2 is set first, the optical waveguide cable 2 is disposed at the predetermined position of the sub-substrate 32 by abutting the film surface of the optical waveguide cable 2 to the sub-substrate 32, and fixes the position of the optical waveguide cable 2 by adhering as shown in FIG. 4A. At this time, the reinforcement member 36 which supports the optical waveguide cable 2 is provided at the disjunction portion of the sub-substrate 32 and the optical waveguide cable 2.

Subsequently, the bump 34 is solder-jointed on the sub-substrate 32 so as to be adjacent to the optical waveguide cable 2, and the photoelectric conversion element 31 is solder-jointed on the top part of the bump 34 as shown in FIG. 4B. The size of the bump 34 is adjusted according to the predetermined height position of the photoelectric conversion element 31 as described above. Further, the photoelectric conversion element 31 is disposed at the predetermined position so that the optical axis of the optical waveguide of the optical waveguide cable 2 matches with that of the photoelectric conversion element 31. Here, the photoelectric conversion element 31 and the bump 34 are joined in advance, and the bump 34 and the sub-substrate 32 may be joined after the position of the photoelectric conversion element 31 is adjusted.

Next, the optical path forming material 35 is filled in the space g which is formed between the disposed optical waveguide cable 2 and the photoelectric conversion element 31 as shown in FIG. 4C. Because the space g is a narrow space, the optical path forming material 35 is sucked in by the capillary phenomena to fill inside of the space g. Further, because the optical path forming material 35 is only retained at the cohesive interface by the capillary phenomena, the exudation of the optical path forming material 35 to the opened optical path 24 portion does not occur.

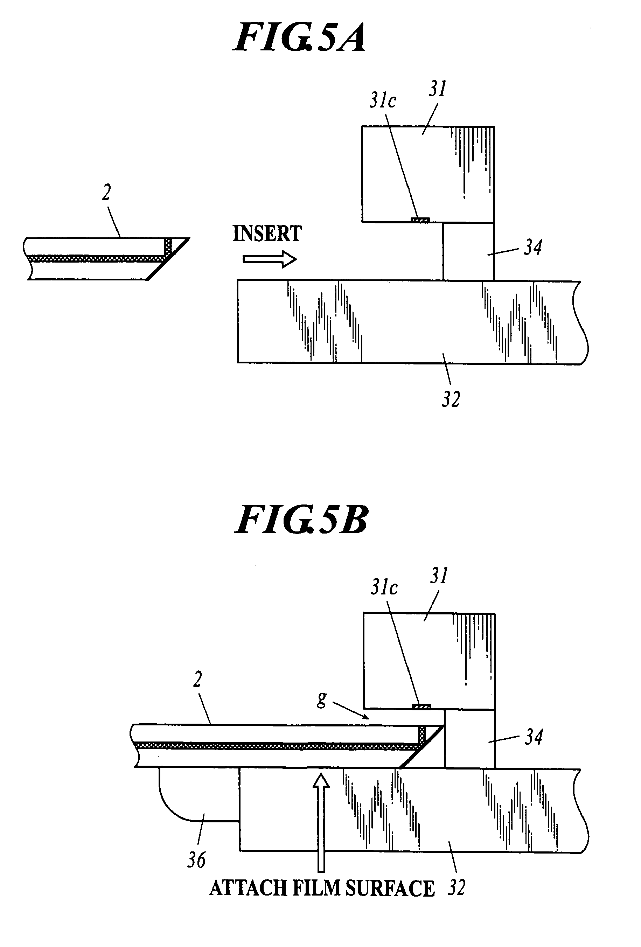

On the other hand, the optical waveguide cable 2 can be attached afterwards.
In such case, the bump 34 and the photoelectric conversion element 31 are attached on the sub-substrate 32 by the solder joining first as shown in FIG. 5A. It is similar as the case described above, that the size of the bump 34 is being adjusted and that the photoelectric conversion element 31 is disposed at the predetermined position.

Next, the optical waveguide cable 2 is inserted between the photoelectric conversion element 31 and the sub-substrate 32, the sub-substrate 32 and the film surface of the optical waveguide cable 2 are adhered when the optical waveguide cable 2 is inserted to the set position, and the position of the optical waveguide 2 is fixed as shown in FIG. 5B. Then, the connector 3 is completed when the space g formed between the optical waveguide cable 2 and the photoelectric conversion element 31 is filled with the optical path forming member 35 as shown in FIG. 4C.

As described above, according to the embodiment, the optical waveguide cable 2 is disposed between the mounting surface of the sub-substrate 32 and the photoelectric conversion element 31 and the height position of the photoelectric conversion element 31 from the mounting surface and the setting position of the photoelectric conversion element 31 on the mounting surface are adjusted by setting the setting position of the optical waveguide cable 2 as the basis. That is, the cause of shifting of the optical axes can be eliminated because the optical waveguide cable 2 and the photoelectric conversion element 31 are optically coupled without using the spacer or the like. Therefore, the optical coupling efficiency can be improved.

Conventionally, as shown in FIGS. 7 and 8, the spacer S was needed to be intervened between the optical waveguide cable 2 and the sub-substrate 32 because the optical waveguide cable 2 was being set by setting the setting position of the photoelectric conversion element 31 as the basis. The intervening of the space S has been a cause of shifting of the optical axes of the optical path between the optical waveguide of the optical waveguide cable 2 and the photoelectric conversion element 31. However, the spacer S is not needed according to the embodiment. Therefore, the accuracy of the positioning of the optical axes can be improved.

Moreover, because the film surface of the optical waveguide cable 2 abuts and adheres to the sub-substrate 32, the optical waveguide cable 2 can be supported by large area and can be mounted stably. Further, an effect of restricting the expansion and reduction of the optical waveguide cable 2 due to the varying of the environmental temperature can be obtained by the adhesion. In such way, the movement of the optical waveguide cable 2 itself can be stabilized and the shifting of the optical axes can be prevented. Therefore, the optical transmission can be carried out stably regardless of environmental change.

According to the embodiment, the only cause of the shifting of the optical axes is the positional relation of the optical waveguide cable 2 and the photoelectric conversion element 31 with respect to the mounting surface. Therefore, the optical axes between the optical waveguide cable 2 and the photoelectric conversion element 31 can be made to match one another by designing the disposing position of the optical waveguide cable 2 and the photoelectric conversion element 31 with respect to the mounting surface the sub-substrate 32 so that the optical axes of the optical paths between the optical waveguide cable 2 and the photoelectric conversion element 31 match one another in advance and by only correctly disposing each unit at the position predetermined by the design in the manufacturing process. That is, the optical path coupling can be carried out by the passive alignment, and the manufacturing efficiency of the optic cable 1 can be improved.

In the conventional structure, it is difficult to carry out the positioning of the optical waveguide cable 2 which has individual difference by setting the photoelectric conversion element 31 as the basis by the passive alignment including the allowable error of the shifting of the optical axes due to the spacer S, and ultimately, the positioning had to be carried out by the active alignment. However, according to the embodiment, because the cause of the shifting of the optical axes due to the spacer S can be eliminated, the matching of the optical axes can be carried out by the passive alignment when at least the optical waveguide cable 2 and the photoelectric conversion element 31 are correctly disposed on the sub-substrate 32. Further, even when the height position of the photoelectric conversion element 31 is not correct, high level of accuracy as in the case of the spacer S is not required for forming of the bump 34 because there is no effect on matching of the optical axes, and the productivity of the optic cable 1 can be improved.

Furthermore, as long as the position of the optical waveguide cable 2 is determined by the design, the optical waveguide cable 2 can be mounted first or the optical waveguide cable 2 can be inserted in the space after setting the photoelectric conversion element 31 so as to form the space between the mounting surface, and the manufacturing process is not limited.

By adjusting the size of the bump 34, the distance between the optical waveguide of the optical waveguide cable 2 and the light receiving and emitting unit 31c of the photoelectric conversion element 31 can be easily controlled. In such way, the distance which yields the best light propagation efficiency can be set and the optical coupling can be attempted to be optimized.

By constituting the bump 34 by a conductor and electrically connecting the electrode of the photoelectric conversion element 31 to the bump 34 by the flip chip method, there is no need to provide a wire P (see FIG. 8) to connect the electrode as in the conventional case. When the optical waveguide cable 2 is mounted on the sub-substrate 32, the wire P may interfere with the tip portion of the optical waveguide cable 2 and there was a case where the optical path coupling is blocked. Because the noise is easily received by the loop formed by the wire P acting as an antenna, it was required to shield the photoelectric conversion element 31 portion. However, in the embodiment, the problem can be solved by not needing the wire P. Because the electrical connection is carried out by the bump 34, the distance between the electrodes can be shortened. Therefore, a simple shielding is enough.

By filling the optical path forming material 35 between the optical waveguide cable 2 and the photoelectric conversion element 31, the optic diameter of the light in the coupled optical path can be controlled. That is, by selecting the material for the optical path forming member 35 so that the refraction factor be approximately the same as the refraction factor of the clad 22 of the optical waveguide cable 2, the broadening of the optic diameter can be suppressed and loss of the light propagation in the coupled optical path can be suppressed.

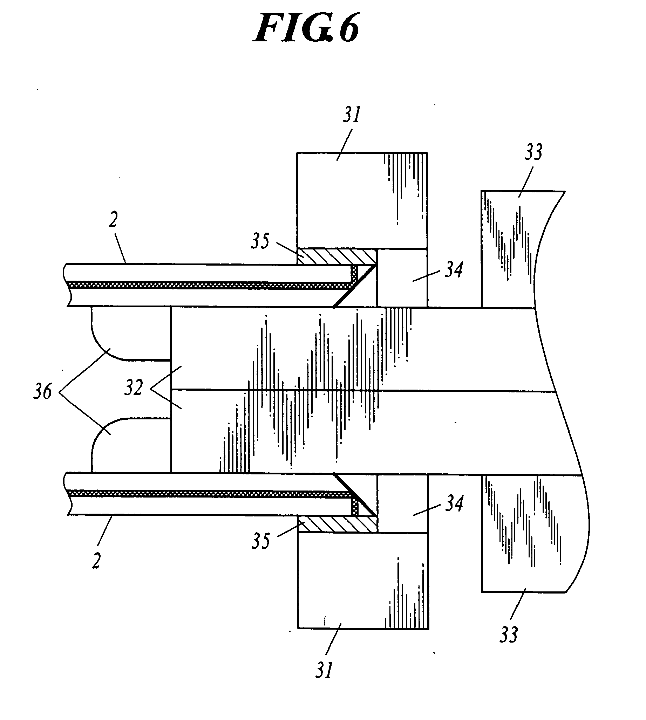

By eliminating the wire P and the space S, the circuit structure can be simplified and the reduction in size and weight of the sending and receiving sub-assembly 3a can be realized. Further, because the padded area for electrical connection becomes smaller than or equal to the element size, two sending and receiving sub-assemblies 3a can be mounted in both sides by matching the back of the sub-substrates 32 as shown in FIG. 6 and the high density mounting can be realized. Also, the sub-substrate 32 can be changed to an electrical circuit substrate. In such case, a very small high density optic cable can be provided.

An array element in which the light emitting element 31a and the light receiving element 31b are integrated can be used. In such case, there is no need to attach each of a plurality of photoelectric conversion element 31 on the sub-substrate 32 and the process is finished by just mounting one array element on the sub-substrate 32. Further, there is no need to adjust the bump 34 for each photoelectric conversion element 31. Therefore, the manufacturing efficiency is good.

### Industrial Application

The present invention can be used in the field of optical communication, and can be applied to the optic cable which carries out the optical communication by using the optical waveguide cable including the core and the clad and to the sending and receiving assembly.

## Claims

1. An optic cable, wherein
an optical waveguide cable in which a core for a light guide is extended in a light guide direction in a clad and a photoelectric conversion element which optically couples with the core at an end portion of the optical waveguide cable are mounted on a same substrate, and
the optical waveguide cable is disposed between a mounting surface of the substrate and the photoelectric conversion element and a height position of the photoelectric conversion element is adjusted according to a height of the optical waveguide cable from the mounting surface.

2. The optic cable as claimed in claim 1, wherein the optical waveguide cable is formed in a film form having flexibility.

3. The optic cable as claimed in claim 2, wherein the optical waveguide cable is disposed on the substrate by a film surface of the optical waveguide cable abutting the substrate.

4. The optic cable as claimed in any one of claims 1 to 3, wherein the height position of the photoelectric conversion element is adjusted by intervening a bump between the photoelectric conversion element and the substrate.

5. The optic cable as claimed in claim 4, wherein the bump is constituted of a conductor.

6. The optic cable as claimed in claim 4 or 5, wherein an electrical connection of an electrode of the photoelectric conversion element is carried out via the bump.

7. The optic cable as claimed in any one of claims 1 to 6, wherein an optical path forming material is filled between the photoelectric conversion element and the optical waveguide cable.

8. The optic cable as claimed in claim 7, wherein the optical path forming material is made of a photorefractive medium and is selected so that the refraction factor of the optical path forming material is approximately same as a refraction factor of the clad.

9. The optic cable as claimed in any one of claims 1 to 8, wherein the photoelectric conversion element is a light emitting element or a light receiving element.

10. The optic cable as claimed in claim 9, wherein the light emitting element is a surface light emitting element.

11. A sending and receiving sub-assembly, wherein
an end portion of an optical waveguide cable in which a core for a light guide is extended in a light guide direction in a clad and a photoelectric conversion element which is optically coupled with the core at the end portion of the optical waveguide cable are mounted on a same substrate, and
the optical waveguide cable is disposed between a mounting surface of the substrate and the photoelectric conversion element and a height position of the photoelectric conversion element is adjusted according to a height of the optical waveguide cable from the mounting surface.

12. The sending and receiving sub-assembly as claimed in claim 11, wherein the optical waveguide cable is formed in a film form having flexibility.

13. The sending and receiving sub-assembly as claimed in claim 12, wherein the optical waveguide cable is disposed on the substrate by a film surface of the optical waveguide cable abutting the substrate.

14. The sending and receiving sub-assembly as claimed in any one of claims 11 to 13, wherein the height position of the photoelectric conversion element is adjusted by intervening a bump between the photoelectric conversion element and the substrate.

15. The sending and receiving sub-assembly as claimed in claim 14, wherein the bump is constituted of a conductor.

16. The sending and receiving sub-assembly as claimed in claim 14 or 15, wherein an electrical connection of an electrode of the photoelectric conversion element is carried out via the bump.

17. The sending and receiving sub-assembly as claimed in any one of claims 11 to 16, wherein an optical path forming material is filled between the photoelectric conversion element and the optical waveguide cable.

18. The sending and receiving sub-assembly as claimed in claim 17, wherein the optical path forming material is made of a photorefractive medium and is selected so that the refraction factor of the optical path forming material is approximately same as a refraction factor of the clad.

19. The sending and receiving sub-assembly as claimed in any one of claims 11 to 18, wherein the photoelectric conversion element is a light emitting element or a light receiving element.

20. The sending and receiving sub-assembly as claimed in claim 19, wherein the light emitting element is a surface light emitting element.
